# EUROPÄISCHE PATENTSCHRIFT

(11) **EP 3 797 220 B1**
(45) Veröffentlichungstag und Bekanntmachung des Hinweises auf die Patenterteilung: **12.07.2023**
(21) Anmeldenummer: 19726337.9
(22) Anmeldetag: 16.05.2019
(51) Int. Cl.: F01N 3/10, F01N 3/28, B01D 46/24

(54) **WABENKÖRPER UND VERFAHREN ZUR HERSTELLUNG DES WABENKÖRPERS**
HONEYCOMB AND METHOD FOR MANUFACTURING THE HONEYCOMB
NID D'ABEILLE ET PROCÉDÉ DE FABRICATION DU NID D'ABEILLE

(30) Priorität: 23.05.2018 DE 102018208098
(43) Veröffentlichungstag der Anmeldung: 31.03.2021
(73) Patentinhaber: Vitesco Technologies GmbH, 93055 Regensburg (DE)
(72) Erfinder: PABST, Christoph, 65824 Schwalbach (DE); HIRTH, Peter, 65824 Schwalbach (DE); SCHEPERS, Sven, 65824 Schwalbach (DE); KURTH, Ferdi, 65824 Schwalbach (DE); VOIT, Michael, 65824 Schwalbach (DE)
(74) Vertreter: Vitesco Technologies
(86) Internationale Anmeldenummer: PCT/EP2019/062604
(87) Internationale Veröffentlichungsnummer: WO 2019/224095

(56) Entgegenhaltungen:
- EP-A1- 0 676 535
- WO-A1-2014/118983
- WO-A1-2018/075931
- DE-A1- 10 056 279
- DE-A1-102012 104 767
- DE-T2- 69 622 777

## Beschreibung

### Technisches Gebiet

Die Erfindung betrifft einen Wabenkörper zur Abgasnachbehandlung mit einer Mehrzahl von aufeinandergestapelten und miteinander verbundenen Metallfolien, wobei der Wabenkörper einen zentralen in axialer Richtung des Wabenkörpers verlaufenden ersten Strömungskanal als Einströmstrecke aufweist und zwischen jeweils zwei zueinander benachbarten Metallfolien eine Mehrzahl von zweiten Strömungskanälen aufweist, wobei der erste Strömungskanal mit den zweiten Strömungskanälen in Fluidkommunikation steht. Außerdem betrifft die Erfindung ein Verfahren zur Erzeugung des Wabenkörpers.

### Stand der Technik

Zum Zwecke der Abgasnachbehandlung werden unterschiedliche im Allgemeinen als Katalysatoren bezeichnete Wabenkörper eingesetzt. Den Wabenkörpern gemein ist dabei im Wesentlichen, dass sie eine Mehrzahl von durchströmbaren Kanälen ausbilden, entlang welcher das zu reinigende Abgas strömen kann. Das Material der die Kanäle ausbildenden Wandungen oder die Beschichtung des Materials ist dabei derart gewählt, dass eine gewünschte chemische Reaktion mit einzelnen Bestandteilen des Abgases stattfindet, wodurch die betroffenen Bestandteile des Abgases in unschädlicherer Produkte umgewandelt werden.

Die im Stand der Technik bekannten Wabenkörper unterscheiden sich neben der jeweiligen Kanalgeometrie insbesondere auch durch die Durchströmungsrichtung voneinander. Im Stand der Technik sind beispielsweise Wabenkörper bekannt, die entlang einer axialen Richtung einfach oder mit Umlenkungen mehrfach durchströmt werden, oder auch Wabenkörper, die in radialer Richtung einfach oder mehrfach durchströmt werden.

Die Wabenkörper sind dabei beispielsweise durch unterschiedlich geformte Metalllagen gebildet, die stapelweise aufeinandergestapelt wurden, wobei die Kanäle durch Hohlräume zwischen den Metalllagen ausgebildet werden.

Insbesondere bei den radial durchströmten Wabenkörpern ist eine Mehrzahl von radial verlaufenden Strömungskanälen bekannt, die ein Durchströmen von einem zentralen axial verlaufenden Strömungskanal durch radial verlaufende Kanäle zu einem in radialer Richtung außen liegenden Strömungskanal ermöglichen. Die Strömungskanäle sind dabei beispielsweise durch gewellte Metalllagen gebildet, die durch glatte Metalllagen zueinander beabstandet sind. Die gewellten Metalllagen werden beispielsweise durch das Tiefziehen von kreisförmigen glatten Blechlagen erzeugt.

Nachteilig an den radial durchströmten Wabenkörpern und an den Herstellverfahren zur Erzeugung der Wabenkörper ist insbesondere, dass durch das Umformen der ringförmigen Metallalgen Spannungen innerhalb der Blechlagen erzeugt werden, die bis hin zur Zerstörung der Blechlagen reichen können. Durch das Einformen der Kanäle in Blechlagen mittels Prägen ist die maximale Höhe der Kanäle begrenzt, da das beim Prägen nachfließende Material deutlich begrenzt ist. Es kann daher dazu kommen, dass die relativ flachen Kanäle beim späteren Verlöten und Beschichten zur erhöhten Anlagerungen von Lotmaterial und dem verwendeten Washcoat führen, wodurch das Verblocken einzelner Kanäle begünstigt wird. Außerdem ist die Herstellung sehr langsam, da es sich bei der Prägung um einen diskontinuierlichen Prozess handelt, und eine sehr exakte Positionierung der Blechlagen erforderlich ist, um eine ausreichend genaue Einprägung der Kanäle zu erreichen. Dadurch werden die Taktzeiten erhöht, was wiederum zu hohen Herstellkosten führt.

Die Publikation EP 0 676 535 A1 zeigt einen Wabenkörper zur Abgasnachbehandlung mit den Merkmalen der Preambel.

### Darstellung der Erfindung, Aufgabe, Lösung, Vorteile

Daher ist es die Aufgabe der vorliegenden Erfindung einen radial durchströmbaren Wabenkörper zu schaffen, der eine optimierte Kanalgeometrie aufweist. Außerdem ist es die Aufgabe ein Verfahren zur Herstellung eines erfindungsgemäßen Wabenkörpers zu schaffen.

Die Aufgabe hinsichtlich des Wabenkörpers wird durch einen Wabenkörper mit den Merkmalen von Anspruch 1 gelöst.

Ein Ausführungsbeispiel der Erfindung betrifft einen Wabenkörper zur Abgasnachbehandlung mit einer Mehrzahl von aufeinandergestapelten und miteinander verbundenen Metallfolien, wobei der Wabenkörper einen zentralen in axialer Richtung des Wabenkörpers verlaufenden ersten Strömungskanal als Einströmstrecke aufweist und zwischen jeweils zwei zueinander benachbarten Metallfolien eine Mehrzahl von zweiten Strömungskanälen aufweist, wobei der erste Strömungskanal mit den zweiten Strömungskanälen in Fluidkommunikation steht, wobei die zwischen zwei zueinander benachbarten Metallfolien ausgebildeten zweiten Strömungskanäle geradlinig und parallel zueinander entlang einer radialen Richtung des Wabenkörpers verlaufen.

Der Wabenkörper kann bevorzugt derart durchströmt werden, dass Abgas durch den zentralen ersten Strömungskanal in einer axialen Richtung einströmt und das Abgas dann um 90 Grad umgelenkt wird und durch die zweiten Strömungskanäle in radialer Richtung strömt. Das Abgas strömt beim Austritt aus den zweiten Strömungskanälen schließlich in einen Ringspalt, der zwischen dem Wabenkörper und einem den Wabenkörper umgebenden Gehäuse ausgebildet ist. Aus diesem Ringspalt kann das Abgas dann beispielsweise in axialer Richtung ausströmen.

Die zweiten Strömungskanäle verlaufen parallel zueinander entlang einer radialen Richtung des Wabenkörpers und in einem 90 Grad Winkel zum ersten Strömungskanal.

Die zweiten Strömungskanäle verlaufen somit ausdrücklich nicht sternförmig von der zentralen axialen Achse des Wabenkörpers weg hin zum radial äußeren Bereich des Wabenkörpers, wie es bei Wabenkörpern aus dem Stand der Technik der Fall ist. Die zweiten Strömungskanäle in dem erfindungsgemäßen Ausführungsbeispiel laufen somit nicht zentral an einem gemeinsamen Punkt zusammen, sondern verlaufen parallel zueinander von einer Seite des Wabenkörpers zu der gegenüberliegenden Seite.

Besonders vorteilhaft ist es, wenn die zweiten Strömungskanäle zwischen zueinander benachbarten Metallfolien durch Wellungen in den Metallfolien gebildet sind, wobei jeweils direkt zueinander benachbarte Metallfolien um einen Winkel von mindestens 5 Grad um die Zentrumsachse des Wabenkörpers verdreht zueinander angeordnet sind.

Insbesondere, wenn zwischen den gewellten Metallfolien keine ungewellten Glattlagen angeordnet sind, müssen die einzelnen Metallfolien um einen gewissen Winkelversatz zueinander verdreht angeordnet sein, damit die Metallfolien nicht ineinander rutschen. Durch das Verdrehen der einzelnen Metallfolien um einen Mindestwinkel um die Zentrumsachse, welche zentral in axialer Richtung des Wabenkörpers verläuft, werden auch die zweiten Strömungskanäle zwischen benachbarten durch die Metallfolien gebildeten Lagen zueinander verdreht.

Durch diesen Versatz gepaart mit der Eigenschaft, dass die zweiten Strömungskanäle in jeder Lage geradlinig und parallel zueinander verlaufen wird erreicht, dass die zweiten Strömungskanäle der zueinander benachbarten Lagen auch um den Verdrehwinkel verdreht zueinander in den den Wabenkörper umgebenden Ringspalt münden. Dadurch kann beispielsweise eine verbesserte Abgasverteilung im Ringspalt erreicht werden.

Erfindungsgemäß ist der erste Strömungskanal durch Ausschnitte in den aufeinandergestapelten Metallfolien gebildet, wobei jede Metallfolie jeweils einen Ausschnitt aufweist.

Der erste Strömungskanal verläuft bevorzugt in axialer Richtung des Wabenkörpers und im Bereich der Zentrumsachse des Wabenkörpers. Jede der Metallfolien weist einen Ausschnitt in diesem Bereich auf. Durch das Aufeinanderstapeln der Metallfolien wird somit der erste Strömungskanal durch die Ausschnitte der einzelnen Metallfolien erzeugt.

Erfindungsgemäß weisst der jeweilige Ausschnitt in den jeweiligen Metallfolien eine wesentlich längere erste Erstreckung in einer Richtung quer zur Erstreckungsrichtung der durch die Wellung der Metallfolie gebildeten zweiten Strömungskanäle als die zweite Erstreckung des Ausschnitts in einer Richtung parallel zur Erstreckungsrichtung der durch die Wellung der Metallfolie gebildeten zweiten Strömungskanäle. Erfindungsgemäß ist der Ausschnitt rautenförmig.

Ein Ausschnitt mit unterschiedlich langen Erstreckungen entlang der Richtung der zweiten Strömungskanäle und quer zu dieser Richtung ist besonders vorteilhaft, um zu erreichen, dass möglichst viele der zweiten Strömungskanäle von dem den ersten Strömungskanal bildenden Ausschnitt geschnitten werden. Aufgrund der erfindungsgemäßen Anordnung der zweiten Strömungskanäle beziehungsweise der Wellung der Metallfolien, kann ein Strömungsübertritt aus dem ersten Strömungskanal in einen zweiten Strömungskanal direkt nur an den zweiten Strömungskanälen stattfinden, die von dem Ausschnitt geschnitten werden. Daher ist es zu bevorzugen, wenn möglichst viele der zweiten Strömungskanäle je Lage vom ersten Strömungskanal beziehungsweise von dem Ausschnitt geschnitten werden.

Bevorzugt weisen die Ausschnitte daher in der Richtung quer zur Erstreckungsrichtung der zweiten Strömungskanäle eine erheblich größere Erstreckung auf, die idealerweise so viele zweite Strömungskanäle schneidet wie möglich.

Auch ist es zu bevorzugen, wenn der Ausschnitt entlang seiner ersten längeren Erstreckung zumindest 70%, besonders bevorzugt zumindest 80%, insbesondere zumindest 90% der ausgebildeten zweiten Strömungskanäle der jeweiligen Metallfolie schneidet. Wie bereits beschrieben, ist es vorteilhafter je mehr zweite Strömungskanäle geschnitten werden. Dies muss jedoch auch im Kontext der Stabilität der einzelnen Metallfolie und des gesamten Wabenkörpers gesehen werden. Zwischen dem Ausschnitt und dem radialen äußeren Endbereich muss ein ausreichend breiter Rand verbleiben, um ein Ausreißen der Metallfolie in diesem Bereich zu vermeiden.

Die zweiten Strömungskanäle in diesem Randbereich können nicht direkt mit Abgas aus dem ersten Strömungskanal beaufschlagt werden. Es kann jedoch, je nach Aufbau des Wabenkörpers, zu einem Überströmen aus zweiten Strömungskanälen aus benachbarten Lagen kommen. Auch können diese vom Ausschnitt nicht geschnittenen zweiten Strömungskanäle von Abgas aus dem den Wabenkörper umgebenden Ringspalt durchströmt werden, was zu einer besseren Gleichverteilung des Abgases führen kann.

Darüber hinaus ist es vorteilhaft, wenn die den Wabenkörper bildenden Metallfolien gewellt sind, wobei direkt zueinander benachbart angeordnete Metallfolien um jeweils 90 Grad um die Zentrumsachse verdreht zueinander angeordnet sind. Dies ist vorteilhaft, um einen besonders stabilen Wabenkörper zu erhalten und zu vermeiden, dass die einzelnen Metallfolien ineinander rutschen.

Durch einen Aufbau des Wabenkörpers mit ausschließlich gewellten Metallfolien die um 90 Grad verdreht zueinander angeordnet sind, wird weiterhin erreicht, dass ein Überströmen zwischen den zueinander direkt benachbarten zweiten Strömungskanälen ermöglicht wird. Die zweiten Strömungskanäle der zueinander direkt benachbarten Metallfolien liegen im Wabenkörper über Kreuz aufeinander, so dass ein Überströmen zwischen einzelnen zweiten Strömungskanälen möglich ist.

Auch ist es zweckmäßig, wenn die zweiten Strömungskanäle über den Wabenkörper hinweg gleichsinnig ausgerichtet sind und zwischen jeweils zwei eine Wellung aufweisenden Metallfolien eine glatte Metallfolie angeordnet ist.

Darüber hinaus ist es vorteilhaft, wenn die gewellten Metallfolien eine Wellung mit parallel zueinander verlaufenden Wellenbergen und Wellentälern aufweisen, welche sich über die gesamte Breite der Metallfolien erstrecken. Insbesondere erstrecken sich die Wellentäler und die Wellenberge von einer Seite am Außenumfang zur gegenüberliegenden Seite am Außenumfang.

Die Aufgabe hinsichtlich des Verfahrens wird durch ein Verfahren mit den Merkmalen von Anspruch 10 gelöst.

Ein Ausführungsbeispiel der Erfindung betrifft ein Verfahren zur Herstellung eines Wabenkörpers, wobei die nachfolgenden Herstellungsschritte durchlaufen werden:
▪ Ausstanzen einer Metallfolie,
▪ Einprägen der Wellung in die Metallfolie,
▪ Stapeln der Metallfolien,
▪ Beloten der Metallfolien mit einem Lotmittel, und
▪ Verlöten der Metallfolien zu einem Wabenkörper.

Ein solches Verfahren ist vorteilhaft, um mit einem möglichst hohen Automatisierungsgrad eine möglichst große Anzahl an Wabenkörpern in möglichst geringer Zeit zu produzieren.

Weiterhin ist es zu bevorzugen, wenn die Metallfolien nach dem Ausstanzen einen ovalen Umriss aufweisen, wobei durch das Einprägen der Wellung eine Materialwanderung erzeugt wird, wodurch die Metallfolien nach dem Einprägen der Wellung einen kreisrunden Umriss aufweisen.

Aufgrund der regelmäßig sehr dünnen Metallfolien entsteht das Problem, dass nur eine sehr begrenzte Materialmenge zur Verfügung steht, die beim Formgebungsprozess durch das Prägen nachfließen kann. Es kann daher schnell zu Rissen in der Metallfolie kommen. Dies ist auch insbesondere ein Problem bei der Erzeugung von Metallfolien mit sternförmig vom Zentrum ausgehenden Strömungskanälen, wie sie im Stand der Technik bekannt sind. Außerdem ist durch die begrenzte Menge an nachfließendem Material die maximal erreichbare Höhe der Wellenberge und Wellentäler begrenzt, weswegen die dadurch erzeugten Strömungskanäle in ihrer Größe begrenzt sind.

Durch das erfindungsgemäße Verfahren wird sichergestellt, dass die Metallfolie nach dem Ausstanzen einen gewissen zusätzlichen Materialanteil aufweist, der dann beim Prägen nachfließen kann. Dieser zum Nachfließen genutzte Materialanteil ist durch die Flächendifferenz zwischen der ausgestanzten ovalen Metallfolie und der fertig geprägten kreisrunden Metallfolie definiert.

Das Prägen kann bevorzugt durch Prägewalzen erfolgen, die kontinuierlich ein Wellenmuster auf die einzelnen Metallfolien übertragen. Der Vorgang ist somit stark automatisierbar und in einer Großserienfertigung einsetzbar.

Außerdem ist es zu bevorzugen, wenn die gewellten Metallfolien jeweils um 90 Grad zueinander verdreht aufeinandergestapelt werden, wobei alle den Wabenkörper bildenden Metallfolien identisch sind. Dies ist vorteilhaft, um einen Wabenkörper zu erzeugen, der ein Überströmen zwischen den zweiten Strömungskanälen erlaubt.

Auch ist es vorteilhaft, wenn abwechselnd gewellte Metallfolien und nicht gewellte glatte Metallfolien aufeinandergestapelt werden, wobei die zweiten Strömungskanäle gleichsinnig zueinander ausgerichtet sind. Dies kann zu einem Wabenkörper mit erhöhter Festigkeit führen. Die Glattlagen können hierbei auch kleinere Öffnungen und/oder Leitstrukturen aufweisen, um auch bei einem solchen Aufbau in definiertem Maße ein Überströmen zwischen den zweiten Strömungskanälen zu ermöglichen.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Aufsicht auf zwei gewellte Metallfolien, wobei die linke Metallfolie einen kreisrunden zentralen Ausschnitt aufweist und die rechte Metallfolie einen erfindungsgemäßen rautenförmigen Ausschnitt aufweist,
- Fig. 2: eine perspektivische Ansicht einer beispielhaften gewellten Metallfolie,
- Fig. 3: eine perspektivische Ansicht eines Wabenkörpers aus mehreren aufeinandergestapelten Metallfolien,
- Fig. 4: eine perspektivische Ansicht eines Wabenkörpers aus mehreren aufeinandergestapelten Metallfolien, wobei zwischen den gewellten Metallfolien auch nicht gewellte glatte Metallfolien angeordnet sind, und
- Fig. 5: eine Ansicht die den Verfahrensablauf verdeutlicht, wobei der Bearbeitungsweg von einer ovalen Grundfolie hin zur gewellten runden Metallfolie und schließlich zum beispielhaften aufgestapelten Wabenkörper gezeigt ist.

### Bevorzugte Ausführung der Erfindung

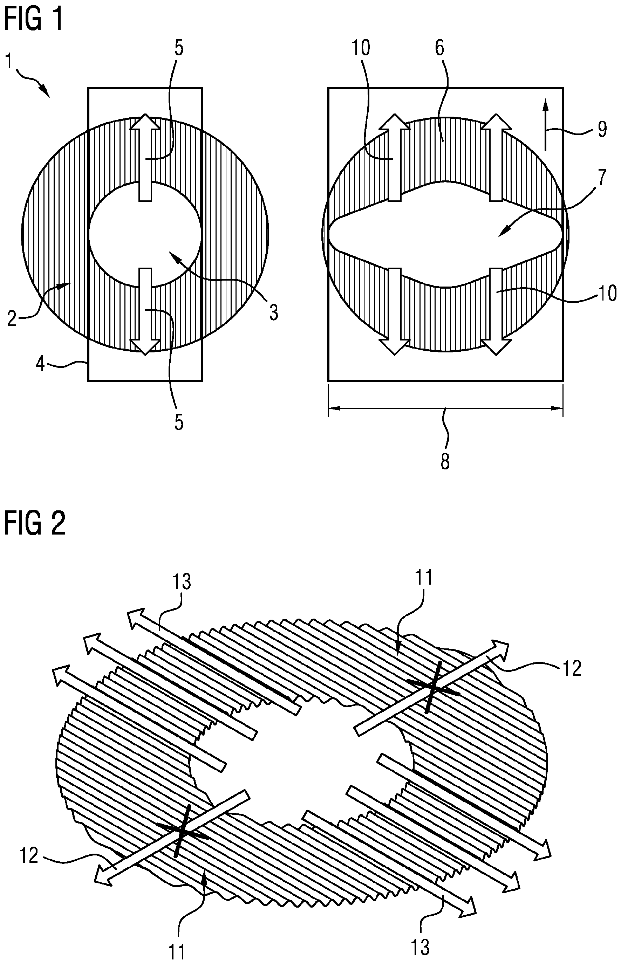

Die Figur 1 zeigt im linken Bereich eine strukturierte Metallfolie 1 mit einer eingeprägten Wellung 2. Die Wellung 2 erzeugt parallel zueinander verlaufende Wellenberge und Welltäler die sich über die gesamte Breite der Metallfolie 1 erstrecken.

Die Metallfolie 1 weist einen zentralen Ausschnitt 3 auf. Die Metallfolie 1 und der Ausschnitt 3 haben einen kreisrunden Umfang, welcher sich durch das Einprägen der Wellung 2 aus der ursprünglich ovalen Metallfolie ergeben hat.

Mit dem Kasten 4 ist der Bereich der Metallfolie 1 gekennzeichnet, der aus dem den ersten Strömungskanal bildenden Ausschnitt 3 durchströmt werden kann, da die durch die Wellung 2 erzeugten zweiten Strömungskanäle in diesem Bereich in den Ausschnitt 3 münden beziehungsweise von diesem geschnitten werden. Mit den Pfeilen 5 ist die mögliche Durchströmung der zweiten Strömungskanäle angedeutet. Es ist dabei zu erkennen, dass lediglich eine geradlinige Durchströmung der in den Ausschnitt 3 mündenden zweiten Strömungskanäle möglich ist.

Im rechten Teil der Figur 1 ist eine Metallfolie 6 mit einem kreisrunden Umfang gezeigt. Abweichend zum linken Teil der Figur 1 weist die Metallfolie 6 einen erfindungsgemäßen rautenförmigen Ausschnitt 7 auf, der eine deutlich größere räumliche Erstreckung 8 in einer Richtung quer zur Erstreckungsrichtung 9 der zweiten Strömungskanäle aufweist, als in einer Richtung parallel zur Erstreckungsrichtung 9 der zweiten Strömungskanäle. Mit den Pfeilen 10 ist die mögliche Durchströmung der zweiten Strömungskanäle angedeutet.

Aufgrund der deutlich größeren Erstreckung 8 des erfindungsgemäßen Ausschnitts 7 wird eine wesentlich größere Menge an zweiten Strömungskanälen von dem Ausschnitt 7 geschnitten, so dass ein Überströmen aus dem durch den Ausschnitt 7 gebildeten ersten Strömungskanal in mehr zweite Strömungskanäle möglich wird als im linken Teil der Figur 1.

Der durch den vergrößerten Ausschnitt 7 entstehende Flächenverlust wird durch die zusätzlich überströmte Oberfläche der zusätzlich durchströmten zweiten Strömungskanäle kompensiert.

Die Figur 2 zeigt eine weitere Ansicht einer beispielhaften gewellten Metallfolie 2, wie sie bereits im linken Teil der Figur 1 gezeigt wurde. In der perspektivischen Ansicht der Figur 2 sind die zweiten Strömungskanäle 11, die durch die Wellung der Metallfolie 2 erzeugt werden, gut erkennbar. Es ist in Figur 2 besonders gut der Unterschied zu einer Metallfolie mit radial ausgerichteten Strömungskanälen zu erkennen.

Während bei solchen Metallfolien alle Strömungskanäle aus dem durch den zentralen Ausschnitt gebildeten Strömungskanal mit Abgas beaufschlagt werden, werden bei der Metallfolie 2 mit den linearen zweiten Strömungskanälen 11 nur die zweiten Strömungskanäle 11 mit Abgas aus dem zentralen Ausschnitt 3 beaufschlagt, die von dem Ausschnitt 3 geschnitten werden. Dementsprechend ist auch nur eine Durchströmung der zweiten Strömungskanäle 11 in zwei von vier Raumrichtungen möglich. In der Richtung quer zum Verlauf der zweiten Strömungskanäle 11 ist die Abgasströmung durch die Wellung der Metallfolie 2 unterbunden. Dies ist mit den durchgestrichenen Pfeilen 12 dargestellt, die die blockierten Strömungsrichtungen zeigen. Die Pfeile 13 zeigen die Richtungen, entlang derer das Abgas strömen kann.

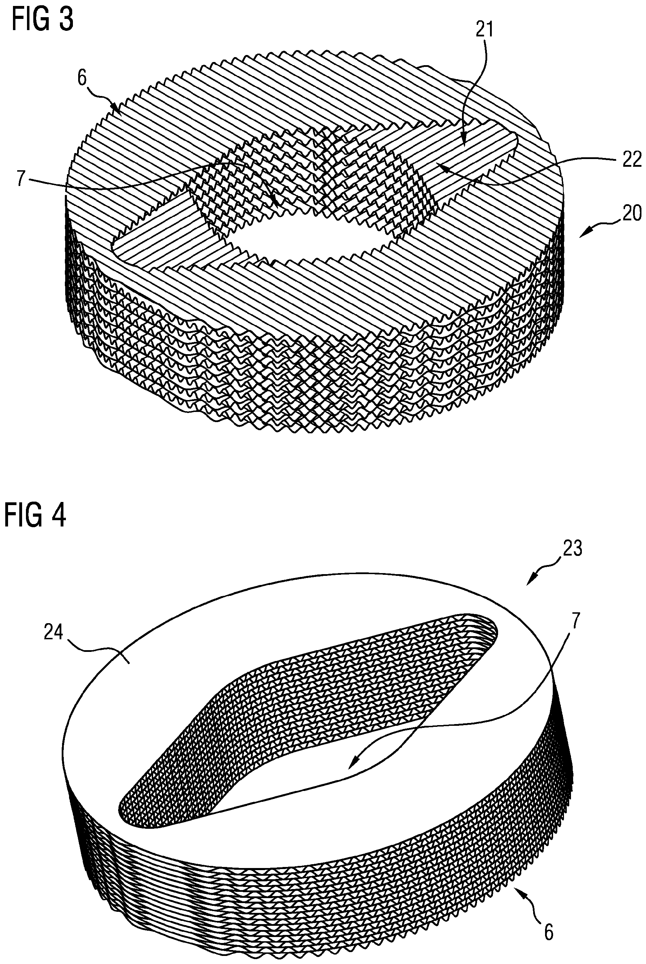

Figur 3 zeigt einen Wabenkörper 20, der aus einer Mehrzahl von Metallfolien 6 gebildet ist, wie sie im rechten Teil der Figur 1 zu sehen sind.

Der Wabenkörper 20 ist aus einem Stapel mehrerer Metallfolien 6 gebildet, wobei die direkt zueinander benachbarten Metallfolien 6 jeweils um 90 Grad zueinander verdreht angeordnet sind. Dies führt dazu, dass die durch die Wellung 21 gebildeten zweiten Strömungskanäle 22 ebenfalls lagenweise um 90 Grad verdreht zueinander angeordnet sind. Somit liegen die zweiten Strömungskanäle 22 abwechselnd kreuzweise übereinander. Durch diese Anordnung wird vorteilhafterweise auch erreicht, dass Abgas zwischen den um 90 Grad verdreht zueinander liegenden zweiten Strömungskanälen 22 überströmen kann, so dass auch zweite Strömungskanäle 22, die nicht von dem zentralen Ausschnitt 7 geschnitten werden durchströmt werden können. Dadurch wird insgesamt der Anteil der durchströmten zweiten Strömungskanäle 22 erhöht, wodurch die Strömungsbeaufschlagung der einzelnen Lagen deutlich verbessert wird.

Darüber hinaus wird die Strömung durch die zweiten Strömungskanäle 22 turbulenter, da ein gewisser Anteil des Abgases zwischen sich kreuzweise überlagernden zweiten Strömungskanälen 22 hin und her strömen wird. Weiterhin ist es vorteilhaft, dass durch den Verzicht auf trennende Glattlagen zwischen den gewellten Metallfolien 6 eine Materialersparnis erreicht wird.

Die Figur 4 zeigt eine alternative Ausgestaltung eines Wabenkörpers 23. Im Unterscheid zum Wabenkörper 22 der Figur 3 sind hier die einzelnen gewellten Metallfolien 6 durch Glattlagen 24 voneinander getrennt. Die zweiten Strömungskanäle bilden sich somit zwischen den jeweils den Glattlagen 24 zugewandten Flächen der Metallfolien 6 und den Glattlagen 24 aus. Die Metallfolien 6 sind gleichsinnig ausgerichtet, so dass alle zweiten Strömungskanäle parallel zueinander verlaufen.

Der Wabenkörper 23 weist ebenfalls einen rautenförmigen Ausschnitt 7 auf. Aufgrund der Glattlagen 24 ist ein Überströmen zwischen zweiten Strömungskanälen unterschiedlicher Metallfolien 6 nicht möglich. Zweite Strömungskanäle die nicht von dem Ausschnitt 7 geschnitten sind, können somit nicht mit Abgas durchströmt werden.

Dies gilt zumindest solange die Glattlagen 24 keine Öffnungen oder Leitelemente anderer Art aufweisen, die ein gezieltes Überströmen zwischen den zweiten Strömungskanälen erlauben.

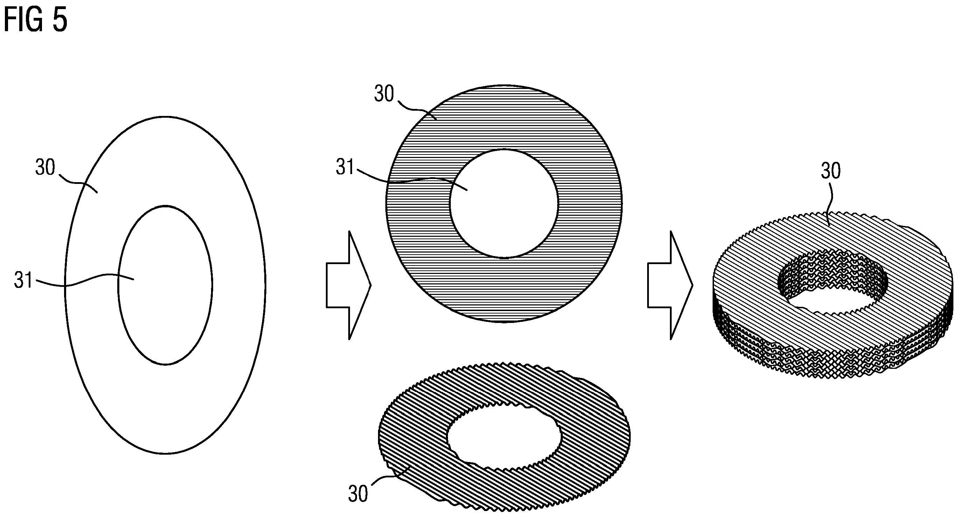

Figur 5 zeigt beispielhaft im linken Teil eine Metallfolie 30 nachdem sie aus einem von einem Coil abgewickelten Metallband ausgestanzt wurde. Es ist zu erkennen, dass die Metallfolie einen ovalen Umriss hat und auch der Ausschnitt 31 oval ausgebildet ist. Im mittleren Teil ist die Metallfolie 30 in zwei Ansichten dargestellt, wobei die Metallfolie 30 hier bereits die Wellung aufweist. Es ist zu erkennen, dass die Metallfolie 30 und auch der Ausschnitt 31 nun einen kreisrunden Umriss aufweisen. Im rechten Teil ist ein Stapel aus mehreren der Metallfolien 30 gezeigt. Um das Ineinanderrutschen der einzelnen Metallfolien 30 zu verhindern sind diese um zumindest 5 Grad um die Zentrumsachse verdreht zueinander angeordnet.

## Patentansprüche

1. Wabenkörper (20, 23) zur Abgasnachbehandlung mit einer Mehrzahl von aufeinandergestapelten und miteinander verbundenen Metallfolien (1, 6, 30), wobei der Wabenkörper (20, 23) einen zentralen in axialer Richtung des Wabenkörpers (20, 23) verlaufenden ersten Strömungskanal als Einströmstrecke aufweist und zwischen jeweils zwei zueinander benachbarten Metallfolien (1, 6, 30) eine Mehrzahl von zweiten Strömungskanälen (11, 22) aufweist, wobei der erste Strömungskanal mit den zweiten Strömungskanälen (11, 22) in Fluidkommunikation steht, wobei die zwischen zwei zueinander benachbarten Metallfolien (1, 6, 30) ausgebildeten zweiten Strömungskanäle (11, 22) geradlinig und parallel zueinander entlang einer radialen Richtung des Wabenkörpers (20, 23) verlaufen, wobei der erste Strömungskanal durch Ausschnitte (7) in den aufeinandergestapelten Metallfolien (1, 6, 30) gebildet ist, wobei jede Metallfolie (1, 6, 30) jeweils einen Ausschnitt (7) aufweist, **dadurch gekennzeichnet, dass** der jeweilige Ausschnitt (7) in den jeweiligen Metallfolien (6) eine wesentlich längere erste Erstreckung (8) in einer Richtung quer zur Erstreckungsrichtung (9) der durch die Wellung (21) der Metallfolie (6) gebildeten zweiten Strömungskanäle (22) aufweist als die zweite Erstreckung des Ausschnitts (7) in einer Richtung parallel zur Erstreckungsrichtung (9) der durch die Wellung (21) der Metallfolie (6) gebildeten zweiten Strömungskanäle (22), wobei der Ausschnitt (7) rautenförmig ist.

2. Wabenkörper (20) nach Anspruch 1, **dadurch ge** - **kennzeichnet** , **dass** die zweiten Strömungskanäle (11, 22) zwischen zueinander benachbarten Metallfolien (1, 6) durch Wellungen (2, 21) in den Metallfolien (1, 6) gebildet sind, wobei jeweils direkt zueinander benachbarte Metallfolien (1, 6) um einen Winkel von mindestens 5 Grad um die Zentrumsachse des Wabenkörpers (20) verdreht zueinander angeordnet sind.

3. Wabenkörper (20, 23) nach einem der vorhergehenden Ansprüche, **dadurch gekennzeichnet, dass** der Ausschnitt (7) entlang seiner ersten längeren Erstreckung (8) zumindest 70%, besonders bevorzugt zumindest 80%, insbesondere zumindest 90% der ausgebildeten zweiten Strömungskanäle (22) der jeweiligen Metallfolie (6) schneidet.

4. Wabenkörper (20) nach einem der vorhergehenden Ansprüche, **dadurch gekennzeichnet, dass** die den Wabenkörper (20) bildenden Metallfolien (6) gewellt sind, wobei direkt zueinander benachbart angeordnete Metallfolien (6) um jeweils 90 Grad um die Zentrumsachse verdreht zueinander angeordnet sind.

5. Wabenkörper (23) nach einem der vorhergehenden Ansprüche, **dadurch gekennzeichnet, dass** die zweiten Strömungskanäle über den Wabenkörper (23) hinweg gleichsinnig ausgerichtet sind und zwischen jeweils zwei eine Wellung aufweisenden Metallfolien (6) eine glatte Metallfolie (24) angeordnet ist.

6. Wabenkörper (20, 23) nach einem der vorhergehenden Ansprüche, **dadurch gekennzeichnet, dass** die gewellten Metallfolien (1, 6) eine Wellung (2, 21) mit parallel zueinander verlaufenden Wellenbergen und Wellentälern aufweisen, welche sich über die gesamte Breite der Metallfolien (1, 6) erstrecken.

7. Verfahren zur Herstellung eines Wabenkörpers (20, 23) nach einem der vorhergehenden Ansprüche, **dadurch gekennzeichnet, dass** die nachfolgenden Herstellungsschritte durchlaufen werden:
▪ Ausstanzen einer Metallfolie (1, 6, 30),
▪ Einprägen der Wellung (2, 21) in die Metallfolie (1, 6, 30),
▪ Stapeln der Metallfolien (1, 6, 30),
▪ Beloten der Metallfolien (1, 6, 30) mit einem Lotmittel, und
▪ Verlöten der Metallfolien (1, 6, 30) zu einem Wabenkörper (20, 23).

8. Verfahren nach Anspruch 7, **dadurch gekennzeichnet, dass** die Metallfolien (30) nach dem Ausstanzen einen ovalen Umriss aufweisen, wobei durch das Einprägen der Wellung eine Materialwanderung erzeugt wird, wodurch die Metallfolien (30) nach dem Einprägen der Wellung einen kreisrunden Umriss aufweisen.

9. Verfahren nach einem der vorhergehenden Ansprüche 7 oder 8, **dadurch gekennzeichnet, dass** die gewellten Metallfolien (1, 6) jeweils um 90 Grad zueinander verdreht aufeinandergestapelt werden, wobei alle den Wabenkörper (20) bildenden Metallfolien (1, 6) identisch sind.

10. Verfahren nach einem der vorhergehenden Ansprüche 7 oder 8, **dadurch gekennzeichnet, dass** abwechselnd gewellte Metallfolien (6) und nicht gewellte glatte Metallfolien (24) aufeinandergestapelt werden, wobei die zweiten Strömungskanäle (22) gleichsinnig zueinander ausgerichtet sind.

## Claims

1. Honeycomb body (20, 23) for exhaust gas aftertreatment, comprising a plurality of interconnected metal foils (1, 6, 30) stacked on one another, wherein the honeycomb body (20, 23) has a central first flow channel running in the axial direction of the honeycomb body (20, 23), as an inflow section, and has a plurality of second flow channels (11, 22) between in each case two mutually adjacent metal foils (1, 6, 30), wherein the first flow channel is in fluid communication with the second flow channels (11, 22), wherein the second flow channels (11, 22) formed between two mutually adjacent metal foils (1, 6, 30) run in a straight line and parallel to one another along a radial direction of the honeycomb body (20, 23), wherein the first flow channel is formed by cutouts (7) in the metal foils (1, 6, 30) stacked on one another, wherein each metal foil (1, 6, 30) has a respective cutout (7), **characterized in that** the respective cutout (7) in the respective metal foils (6) has a substantially longer first extent (8) in a direction transverse to the direction of extent (9) of the second flow channels (22) formed by the corrugation (21) of the metal foil (6) than the second extent of the cutout (7) in a direction parallel to the direction of extent (9) of the second flow channels (22) formed by the corrugation (21) of the metal foil (6), wherein the cutout (7) is diamond-shaped.

2. Honeycomb body (20) according to Claim 1, **characterized in that** the second flow channels (11, 22) between mutually adjacent metal foils (1, 6) are formed by corrugations (2, 21) in the metal foils (1, 6), wherein metal foils (1, 6) which are in each case directly mutually adjacent are arranged rotated with respect to one another by an angle of at least 5 degrees about the central axis of the honeycomb body (20).

3. Honeycomb body (20, 23) according to either of the preceding claims, **characterized in that** the cutout (7) along its first longer extent (8) intersects at least 70%, particularly preferably at least 80%, in particular at least 90% of the second flow channels (22) formed in the respective metal foil (6).

4. Honeycomb body (20) according to one of the preceding claims, **characterized in that** the metal foils (6) forming the honeycomb body (20) are corrugated, wherein metal foils (6) arranged directly mutually adjacent are arranged rotated with respect to one another by in each case 90 degrees around the central axis.

5. Honeycomb body (23) according to one of the preceding claims, **characterized in that** the second flow channels are aligned in the same direction across the honeycomb body (23) and a smooth metal foil (24) is arranged between each two metal foils (6) having a corrugation.

6. Honeycomb body (20, 23) according to one of the preceding claims, **characterized in that** the corrugated metal foils (1, 6) have a corrugation (2, 21) with wave crests and wave troughs which run parallel to one another and extend over the entire width of the metal foils (1, 6) .

7. Method for producing a honeycomb body (20, 23) according to one of the preceding claims, **characterized in that** the following production steps are carried out:
▪ punching out a metal foil (1, 6, 30),
▪ embossing the corrugation (2, 21) in the metal foil (1, 6, 30),
▪ stacking the metal foils (1, 6, 30),
▪ soldering the metal foils (1, 6, 30) with a solder, and
▪ soldering the metal foils (1, 6, 30) to form a honeycomb body (20, 23).

8. Method according to Claim 7, **characterized in that** the metal foils (30) after being punched out have an oval outline, wherein the embossing of the corrugation produces migration of the material, whereby the metal foils (30) have a circular outline after the embossing of the corrugation.

9. Method according to either of the preceding Claims 7 or 8, **characterized in that** the corrugated metal foils (1, 6) are stacked on one another rotated in each case by 90 degrees with respect to one another, wherein all of the metal foils (1, 6) forming the honeycomb body (20) are identical.

10. Method according to either of the preceding Claims 7 or 8, **characterized in that** alternately corrugated metal foils (6) and non-corrugated smooth metal foils (24) are stacked on one another, wherein the second flow channels (22) are aligned in the same direction with respect to one another.

## Revendications

1. Corps en nid d'abeilles (20, 23) pour le post-traitement de gaz d'échappement, avec une pluralité de feuilles métalliques (1, 6, 30) empilées les unes sur les autres et reliées entre elles, le corps en nid d'abeilles (20, 23) présentant un premier canal d'écoulement central s'étendant dans la direction axiale du corps en nid d'abeilles (20, 23) en tant que section d'entrée et présentant, entre respectivement deux feuilles métalliques (1, 6, 30) voisines l'une de l'autre, une pluralité de deuxièmes canaux d'écoulement (11, 22), le premier canal d'écoulement étant en communication fluidique avec les deuxièmes canaux d'écoulement (11, 22), les deuxièmes canaux d'écoulement (11, 22) formés entre deux feuilles métalliques (1, 6, 30) voisines l'une de l'autre s'étendant de manière rectiligne et parallèlement les uns aux autres le long d'une direction radiale du corps en nid d'abeilles (20, 23), le premier canal d'écoulement étant formé par des découpes dans les feuilles métalliques (1, 6, 30) empilées les unes sur les autres, chaque feuille métallique (1, 6, 30) présentant une découpe respective, **caractérisé en ce que** la découpe respective (7) dans les feuilles métalliques respectives (6) présente une première extension (8) essentiellement plus longue dans une direction transversale à la direction d'extension (9) des deuxièmes canaux d'écoulement (22) formés par l'ondulation (21) de la feuille métallique (6) que la deuxième extension de la découpe (7) dans une direction parallèle à la direction d'extension (9) des deuxièmes canaux d'écoulement (22) formés par l'ondulation (21) de la feuille métallique (6), la découpe (7) étant en forme de losange.

2. Corps en nid d'abeilles (20) selon la revendication 1, **caractérisé en ce que** les deuxièmes canaux d'écoulement (11, 22) entre des feuilles métalliques (1, 6) voisines les unes des autres sont formés par des ondulations (2, 21) dans les feuilles métalliques (1, 6), des feuilles métalliques (1, 6) directement voisines les unes des autres étant agencées en étant tournées les unes par rapport aux autres d'un angle d'au moins 5 degrés autour de l'axe central du corps en nid d'abeilles (20).

3. Corps en nid d'abeilles (20, 23) selon l'une quelconque des revendications précédentes, **caractérisé en ce que** la découpe (7), le long de sa première extension (8) la plus longue, coupe au moins 70 %, de manière particulièrement préférée au moins 80 %, notamment au moins 90 % des deuxièmes canaux d'écoulement (22) formés de la feuille métallique (6) respective.

4. Corps en nid d'abeilles (20) selon l'une quelconque des revendications précédentes, **caractérisé en ce que** les feuilles métalliques (6) formant le corps en nid d'abeilles (20) sont ondulées, des feuilles métalliques (6) agencées directement au voisinage les unes aux autres étant agencées en étant tournées les unes par rapport aux autres respectivement de 90 degrés autour de l'axe central.

5. Corps en nid d'abeilles (23) selon l'une quelconque des revendications précédentes, **caractérisé en ce que** les deuxièmes canaux d'écoulement sont orientés dans le même sens sur le corps en nid d'abeilles (23) et une feuille métallique lisse (24) est agencée entre respectivement deux feuilles métalliques (6) présentant une ondulation.

6. Corps en nid d'abeilles (20, 23) selon l'une quelconque des revendications précédentes, **caractérisé en ce que** les feuilles métalliques ondulées (1, 6) présentent une ondulation (2, 21) avec des crêtes d'ondulation et des creux d'ondulation parallèles les uns aux autres, qui s'étendent sur toute la largeur des feuilles métalliques (1, 6).

7. Procédé de fabrication d'un corps en nid d'abeilles (20, 23) selon l'une quelconque des revendications précédentes, **caractérisé en ce que** les étapes de fabrication suivantes sont réalisées :
- le découpage d'une feuille métallique (1, 6, 30),
- la gravure de l'ondulation (2, 21) dans la feuille métallique (1, 6, 30),
- l'empilement des feuilles métalliques (1, 6, 30),
- le brasage des feuilles métalliques (1, 6, 30) avec un agent de brasage, et
- le soudage des feuilles métalliques (1, 6, 30) en un corps en nid d'abeilles (20, 23).

8. Procédé selon la revendication 7, **caractérisé en ce que** les feuilles métalliques (30) présentent un contour ovale après le découpage, une migration de matériau étant générée par la gravure de l'ondulation, moyennant quoi les feuilles métalliques (30) présentant un contour circulaire après la gravure de l'ondulation.

9. Procédé selon l'une quelconque des revendications 7 ou 8 précédentes, **caractérisé en ce que** les feuilles métalliques ondulées (1, 6) sont empilées les unes sur les autres en étant tournées les unes par rapport aux autres de 90 degrés, toutes les feuilles métalliques (1, 6) formant le corps en nid d'abeilles (20) étant identiques.

10. Procédé selon l'une quelconque des revendications 7 ou 8 précédentes, **caractérisé en ce que** des feuilles métalliques ondulées (6) et des feuilles métalliques lisses non ondulées (24) sont empilées les unes sur les autres en alternance, les deuxièmes canaux d'écoulement (22) étant orientés dans le même sens les uns par rapport aux autres.
